(19) Europäisches Patentamt
European Patent Office
Office européen des brevets

(11) EP 4 668 099 A1

## (12) EUROPEAN PATENT APPLICATION

(43) Date of publication:
24.12.2025 Bulletin 2025/52

(21) Application number: 24183568.5

(22) Date of filing: 20.06.2024

(51) International Patent Classification (IPC):
G06F 7/544 (2006.01)    G06F 16/2458 (2019.01)
G06F 17/18 (2006.01)

(52) Cooperative Patent Classification (CPC):
G06F 7/544; G06F 16/2462; G06F 17/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Signaloid Limited
Cambridge Cambridgeshire CB1 2GE (GB)

(72) Inventors:
• Stanley-Marbell, Phillip
Cambridge (GB)
• Tsoutsouras, Vasileios
Cambridge (GB)
• Bilgin, Bilgesu
Cambridge (GB)

(74) Representative: Legl, Stefan
Stollstraße 26
85053 Ingolstadt (DE)

### (54) UNCERTAINTY TRACKING

(57) The present disclosure relates to a computer-implemented method for computation on distributions, comprising:

obtaining at least a first representation of a first distributional variable and a second representation of a second distributional variable; and

executing an arithmetic operation on the first representation and the second representation to obtain a computation result in the form of a third representation of a third distributional variable,

wherein executing the arithmetic operation on the first representation and the second representation is based on, or includes, correlation information, which indicates a correlation of at least one of the first representation and the second representation with one or more correlated distributional variables.

**Fig. 5**

$A_i = (p_{A_i}, m_{A_i})$

$B_j = (p_{B_j}, m_{B_j})$

$C_k = (p_{C_k}, m_{C_k})$

$X = A + B$

$(p_{X_{i,j}}, m_{X_{i,j}}) = X_{i,j} = A_i + B_j = (p_{A_i} + p_{B_j}, m_{A_i} \times m_{B_j})$

$Y = A \times B$

$(p_{Y_{i,j}}, m_{Y_{i,j}}) = Y_{i,j} = A_i \times B_j = (p_{A_i} \times p_{B_j}, m_{A_i} \times m_{B_j})$

$Z = B - C$

$(p_{Z_{j,k}}, m_{Z_{j,k}}) = Z_{j,k} = B_j - C_k = (p_{B_j} - p_{C_k}, m_{B_j} \times m_{C_k})$

$U = X / Y$

$(p_{U_{i,j}}, m_{U_{i,j}}) = U_{i,j} = X_{i,j} / Y_{i,j} = (p_{X_{i,j}} / p_{Y_{i,j}}, m_{A_i} \times m_{B_j})$

$V = Y \wedge Z$

$(p_{V_{i,j,k}}, m_{V_{i,j,k}}) = V_{i,j,k} = Y_{i,j} \wedge Z_{j,k} = (p_{Y_{i,j}} \wedge p_{Y_{j,k}}, m_{A_i} \times m_{B_j} \times m_{C_k})$

EP 4 668 099 A1

## Description

### FIELD

The present disclosure relates to a computer-implemented method for computation on distributions, a data processing system for computation on distributions, a computer program and a computer-readable storage medium. More particularly, the present disclosure relates to Joint Telescoping Torques Distribution Representation, jTTR.

### BACKGROUND

Uncertain data are ubiquitous in computing systems. One common example is sensor measurements: there is always uncertainty, no matter how precise the instrument, between the recorded value (the measurement) and the quantity being measured (the measurand). This form of measurement uncertainty can be quantified by using multiple simultaneous measurements or by performing repeated measurements at a rate faster than the measurand can change. It is then possible to quantify the variation across measurements using statistical analysis or by noting the number of significant (i.e., unchanging) digits across the measurements. Such numerically-quantified uncertainty is referred to in the literature as aleatoric uncertainty. Uncertainty may also exist when there is insufficient information about a quantity of interest. Such uncertainty in values resulting from incomplete information is often referred to in the literature as epistemic uncertainty.

Despite the relevance of uncertainty in computing systems, existing computer architectures neither have support for representing uncertainty, nor for arithmetic on uncertain values. Computer architectures today represent uncertain values with single particle values (i.e., data with no associated distribution), usually by taking the mean value as the representation for use in computation. In much the same way that the abstraction of floating-point number representations and floating-point arithmetic improved the ease of implementation of real-valued computations, architectural and microarchitectural support for representations of uncertainty could similarly enable new approaches to computation.

### SUMMARY

In light of the above, a computer-implemented method for computation on distributions, a data processing system for computation on distributions, a computer program and a computer-readable storage medium are provided.

It is an object of the present disclosure to be able to perform calculations on uncertainty distributions, particularly with improved accuracy. Another object of the present disclosure is to minimize the time and/or resources required for calculations on uncertainty distributions.

The objects are solved by the features of the independent claims. Preferred embodiments are defined in the dependent claims.

According to an independent aspect of the present disclosure, a computer-implemented method for computation on distributions, preferably computation on representation of distributional variables. The computer-implemented method includes obtaining at least a first representation of a first distributional variable and a second representation of a second distributional variable; and executing an arithmetic operation on the first representation and the second representation to obtain a computation result in the form of a third representation of a third distributional variable.

According to some embodiments, which can be combined with other embodiments described herein, executing the arithmetic operation on the first representation and the second representation is based on, or includes, correlation information, which indicates a correlation of at least one of the first representation and the second representation with one or more correlated distributional variables.

According to some embodiments, which can be combined with other embodiments described herein, the arithmetic operation is selected from the group including, or consisting of, addition, subtraction, multiplication, division and exponentiation.

According to some embodiments, which can be combined with other embodiments described herein, the first representation and/or the second representation and/or the third representation are in the form of a sum of Dirac deltas.

Preferably, the first representation and/or the second representation and/or the third representation are sum-of-Dirac-deltas representations, where each position of the representation is represented by a non-zero mass Dirac delta associated with a corresponding probability mass.

According to some embodiments, which can be combined with other embodiments described herein, at least one of the first distributional variable and the second distributional variable is based on a data set.

Preferably, the data set includes, or is, a set of empirical samples or an analytic distribution or a set of sensor readings.

According to some embodiments, which can be combined with other embodiments described herein, the data set includes, or is, multidimensional data. For any integer $n \geq 1$, an $n$-dimensional data point is an $n$-tuple ($a_1, a_2, ..., a_n$), where

all $a_i$ are real numbers. *n*-dimensional data is a collection of n-dimensional data points. Multidimensional data thus refers to *n*-dimensional data for some fixed integer $n \geq 1$.

According to some embodiments, which can be combined with other embodiments described herein, obtaining at least a first representation of a first distributional variable and a second representation of a second distributional variable includes processing multidimensional data to generate a representation for each dimension of the multidimensional data.

Preferably, the correlation information indicates a correlation between dimensions of the multidimensional data.

According to some embodiments, which can be combined with other embodiments described herein, the correlation information indicates a correlation between (i) said at least one of the first distributional variable or the second distributional variable and (ii) at least one further distributional variable from which said at least one of the first distributional variable or the second distributional variable originates.

Preferably, said at least one of the first distributional variable or the second distributional variable originates from the at least one further distributional variable through an arithmetic operation.

According to some embodiments, which can be combined with other embodiments described herein, the method further includes obtaining initial distributional variables from a data set and defining ancestor groups of initial distributional variables or their respective representations based on one or more grouping criteria.

Preferably, the correlation information relates to one or more ancestor groups from which the first distributional variable and the second distributional variable originate.

Preferably, the initial distributional variables are not results of computer-implemented arithmetic operations.

According to some embodiments, which can be combined with other embodiments described herein, the one or more grouping criteria include at least one of: (i) each ancestor belongs to only one single ancestor group, (ii) ancestors within each ancestor group are correlated with each other, and (iii) two ancestors from two different ancestor groups are not correlated with each other.

According to some embodiments, which can be combined with other embodiments described herein, the one or more grouping criteria consist of the following criteria: (i) each ancestor belongs to only one single ancestor group, (ii) ancestors within each ancestor group are correlated with each other, and (iii) two ancestors from two different ancestor groups are not correlated with each other.

According to some embodiments, which can be combined with other embodiments described herein, the method further includes storing the representations of the distributional variables based on their ancestor groups.

Preferably, a memory layout is based on a d-dimensional discrete hypercube.

According to some embodiments, which can be combined with other embodiments described herein, the computer-implemented method for computation on distributions is a method for uncertainty tracking.

The term "uncertainty tracking" (or uncertainty propagation) as used throughout the present disclosure generally refers to the process of quantifying and managing uncertainties or variations associated with the input data as well as quantifying the uncertainties of the results of each operation, e.g., ADD, SUB, etc., as the input data are processed by the compute device/compute module. The term "uncertainty tracking" (or uncertainty propagation) particularly refers to the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item. Uncertainty tracking aims to provide a more comprehensive understanding of the limitations and potential errors associated with computational outcomes. It involves techniques and methodologies for representing, propagating, and, in some cases, mitigating uncertainties to enhance the reliability and robustness of computational results. This becomes particularly crucial when dealing with real-world data, complex models, or situations where precise information is challenging to obtain. Non-limiting exemplary methods for processing uncertainty information are explained in WO2022248719.

According to an independent aspect of the present disclosure, a data processing system for computation on distributions, preferably computation on representation of distributional variables, is provided. The data processing system includes one or more processors configured to obtain at least a first representation of a first distributional variable and a second representation of a second distributional variable; and execute an arithmetic operation on the first representation and the second representation to obtain a computation result in the form of a third representation of a third distributional variable.

According to some embodiments, which can be combined with other embodiments described herein, the one or more processors are configured to execute the arithmetic operation on the first representation and the second representation based on correlation information, which indicates a correlation of at least one of the first representation and the second representation with one or more correlated distributional variables.

According to some embodiments, which can be combined with other embodiments described herein, the one or more processors of the data processing system are configured to perform the computer-implemented method for computation on distributions according to the embodiments described in this document.

According to another independent aspect of the present disclosure, a computer program is provided. The computer program has instructions which, when the program is executed by a computer, cause the computer to carry out the method for computation on distributions according to the embodiments described in this document.

According to another independent aspect of the present disclosure, a computer-readable storage medium is provided. The computer-readable storage medium has instructions which, when the program is executed by a computer, cause the computer to carry out the method for computation on distributions according to the embodiments described in this document.

According to another independent aspect of the present disclosure, a computer-implemented method for computation on distributions is provided. The method includes obtaining at least a first representation of a first distributional variable and a second representation of a second distributional variable; and executing an arithmetic operation on the first representation and the second representation to obtain a computation result in the form of a third representation of a third distributional variable.

According to some embodiments, which can be combined with other embodiments described herein, at least one of the first distributional variable and the second distributional variable is based on an initial arithmetic operation involving at least one initial distributional variable defined by a data set. Executing the arithmetic operation on the first representation and the second representation may use ancestral information comprising correlation information between the at least one initial distributional variable and the first distributional variable or second distributional variable based on the initial arithmetic operation.

According to another independent aspect of the present disclosure, a computer-implemented method for computation on distributions is provided. The method includes executing an arithmetic operation on a first representation of a first distributional variable and a second representation of a second distributional variable based on a correlation between the first distributional variable and at least one further distributional variable from which the first distributional variable originates.

According to another independent aspect of the present disclosure, a computer-implemented method for computation on distributions is provided. The method includes obtaining initial distributional variables from a data set, wherein the initial distributional variables are not results of computer-implemented arithmetic operations; defining ancestor groups of initial distributional variables based on one or more grouping criteria; and executing an arithmetic operation on a first distributional variable and a second distributional variable based on one or more of the ancestor groups from which at least one of the first distributional variable and the second distributional variable originates from.

**BRIEF DESCRIPTION OF THE DRAWINGS**

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1     illustrates a schematic view of a conventional processor unit;

FIG. 2     illustrates a schematic view of a processor unit according to embodiments of the present disclosure;

FIG. 3     illustrates the construction of an uncertainty representation using Telescoping Torques Representation (TTR) according to embodiments of the present disclosure;

FIG. 4     illustrates a bit-level layout of an uncertainty representation according to embodiments of the present disclosure;

FIG. 5     illustrates an example of carrying out arithmetic operations with jTTR; and

FIG. 6     illustrates a comparative example for uncertainty tracking using TTR and j TTR.

**DETAILED DESCRIPTION OF EMBODIMENTS**

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware, for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in a manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

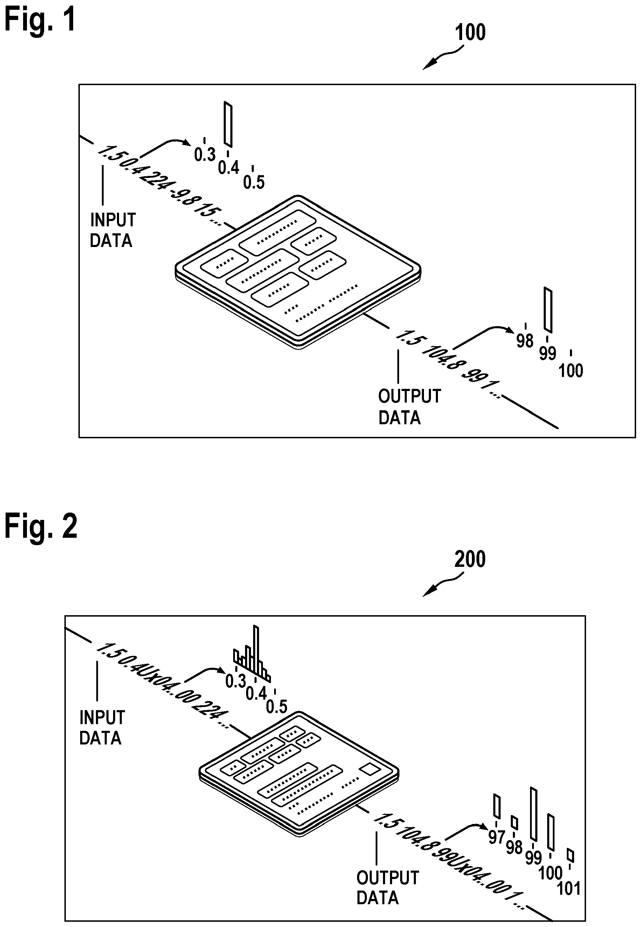

FIG. 1 illustrates a schematic view of a conventional processor unit 100.

A conventional processor unit 100 takes as input integer and floating-point values and performs operations (e.g., ADD, SUBSTRACT, MULTIPLY, XOR, etc.) on these data. The results of these operations are other integers or floating-point values.

Uncertainties in input data such as readings from sensors or stock market data are not uncommon, but the conventional processor unit 100 can only deal with integer and floating-point values which are certain and unambiguous. Therefore, the software running over the conventional processor unit 100 eliminates the uncertainties by averaging the variations across readings into a single number or performing some other statistical analysis to reduce the readings, to get the data into a form that the conventional processor unit 100 can handle, before feeding the averaged data into subsequent steps.

However, in many cases, the accuracy of the processing result is critical. For example, if an autonomous control algorithm of a driverless car must perform an emergency stop, the uncertainties in the sensor data may affect whether the emergency stop is performed in a safe manner. Because computers today can only perform calculations on numbers as opposed to being able to perform calculations on uncertainty distributions, the accuracy of the processing results may be insufficient, at least for some applications.

FIG. 2 illustrates a schematic view of a processor unit 200 according to embodiments of the present disclosure.

The processor unit 200 of the present disclosure can take in as input the same kinds of integer and floating-point values and perform the same kinds of operations (e.g., ADD, SUBSTRACT, MULTIPLY, XOR, etc.) as the conventional processor unit. In addition to that, the values taken as input include additional information about distributions associated with each value, and the processor unit 200 may also, in some embodiments, enable a number of additional operations that act on the distribution information (e.g., BAYESLAPLACE, DISTFROMSAMPLES, etc.).

To enable uncertainty tracking, a data set, such as an empirical data set or an analytic distribution, can be processed to generate a representation of the uncertainty distribution associated with the data set. This representation, also known as "uncertainty representation", captures the variability and potential errors within the data set. In preferred embodiments of the present disclosure, the uncertainty representation is a representation of probability mass/density functions/distributions on which a processor unit (e.g., the processor unit 200 shown in FIG. 2) can operate. In the same way that each value of a floating-point register is an approximate representation of a real-valued number, a value in the uncertainty representation is an approximation of an entire probability mass function.

A representation generation algorithm can be used to generate the representation of the uncertainty distribution information from the data set. In preferred embodiments, the representation generation algorithm can be configured to generate the uncertainty representation according to a position parameter and a probability parameter, wherein each position of the uncertainty representation is represented by a Dirac delta associated with a corresponding probability mass. In other words, each real number in the domain of a distribution may be described by a Dirac delta with some probability mass located at the value of the real number.

It should be noted that this representation of a distribution in terms of Dirac deltas within its domain is different from that of a probability mass function (PMF), where the domain of the distribution is by definition discrete-valued and integrals can be replaced with sums. Because the Dirac delta distribution is not a function but rather is a distribution, the representation of distributions as a collection of Dirac deltas is also different from the concept of a probability density function (PDF). In general, one can call a representation made up of Dirac deltas that integrate to 1.0 (i.e., their probability masses sum up to 1.0) a probability density distribution (PDD) which is a generalization of a probability density function (PDF) (i.e., a PDF is a PDD but not vice versa).

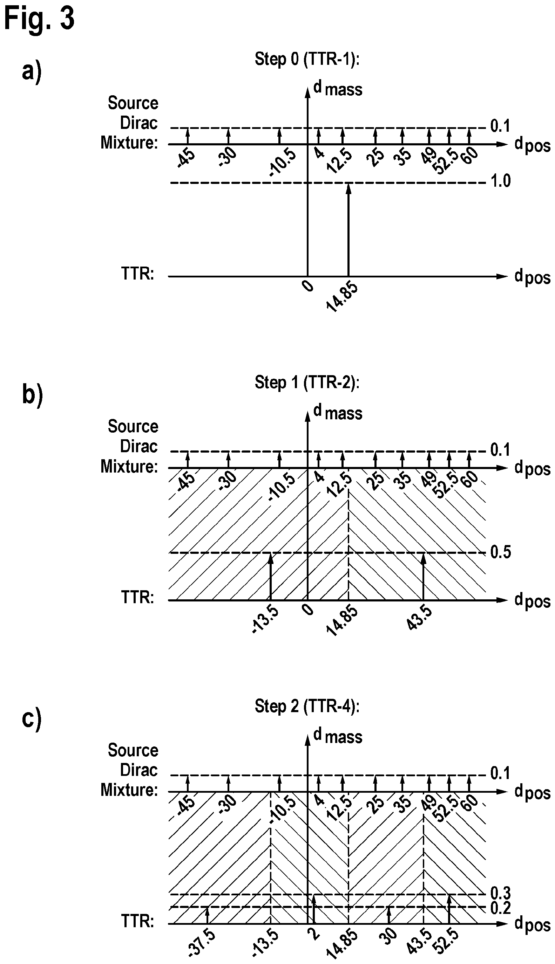

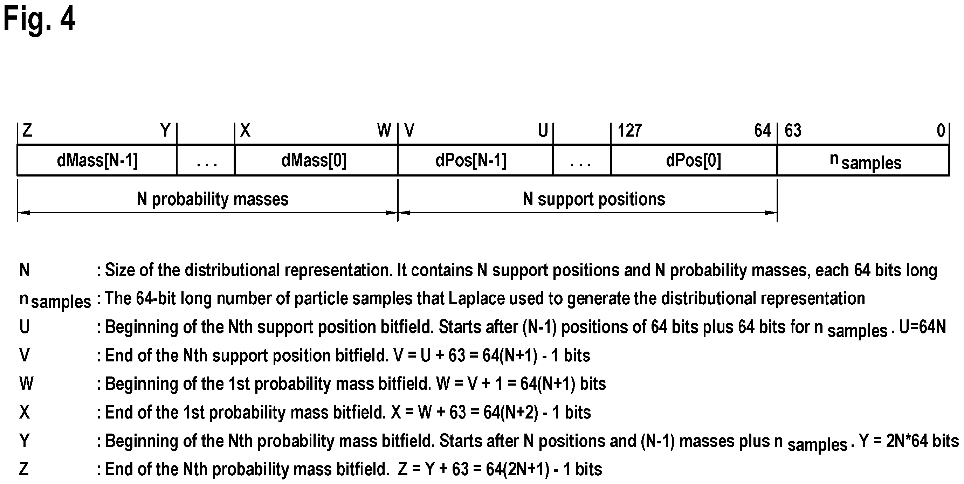

The so-called Telescoping Torques Representation (TTR) is described below with reference to FIGs. 3 and 4 as an example of an uncertainty representation of a distribution in terms of Dirac deltas. The Telescoping Torques Representation (TTR) builds on Dirac mixture representation and is based on the intuition that the mean value of a set of samples splits the samples into two sets with equal products of the distance of the sample from the mean and the sample probability. This allows the representation to capture the effects of unlikely, yet high-value samples even at small representation sizes.

Let $src_{DM}$ be a Dirac mixture of samples from a random variable $X$. Let $N$ be a positive integer power of two. $src_{DM}$ is converted to a distribution representation of size $N$ using a recursive conversion algorithm of $log_2 N$ steps. The number of steps is what is referred to as the "order" of the distribution representation. At each step, the algorithm splits a source Dirac mixture on its mean value $m$, creating two Dirac mixtures, which are the inputs of two new calls to the algorithm.

FIG. 3 illustrates an example for $N = 4$, starting from a $src_{DM}$ of 10 particles. The top part of FIG. 3 illustrates the source Dirac mixture. The mixture consists of 10 Dirac deltas, each one positioned at the value of each unique source sample. The mass of each Dirac delta is 0.1, equal to the relative frequency of each particle sample.

In step 0 of FIG. 3(a), the conversion algorithm creates the zeroth-order distribution representation of $src_{DM}$, which is a single Dirac delta located at the mean ($m = 14.85$) of $src_{DM}$ (i.e., $d_{pos}[0] = 14.85$) with probability mass equal to the sum of the probability masses of all Dirac deltas in $src_{DM}$ ($d_{mass}[0] = 1.0$).

In step 1 of FIG. 3(b), the conversion algorithm splits $src_{DM}$ into two mixtures (each with five Dirac deltas in this example) using $m$ as a boundary, and repeats the process for each sub-mixtures. FIG. 3(b) illustrates the first-order distribution representation of $src_{DM}$, which has two Dirac deltas positioned at the mean value of the Dirac mixture splits of step 0, each one with probability mass equal to 0.5.

In step 2 of FIG. 3(c), the conversion process repeats, further splitting the sub-mixtures of step 1, into two parts. This results in four sub-mixtures and four Dirac deltas that represent them and form the second-order distribution representation of $src_{DM}$. FIG. 3(c) illustrates that the split in step 1 results in sub-mixtures that each contain a different number of source particle samples. Step 2 represents these sub-mixtures with Dirac deltas with unequal probability masses. FIG. 3(c) illustrates that the outcome Dirac deltas retain the property of equal probability torque on the two sides of the mean value of the source Dirac mixture ($m = 14.85$).

A Dirac mixture requires only a series of positions $x_i$ and probability masses $p_i$ for its description. For a random variable $d$, its Dirac mixture of size $N$ is an array of 2N floating-point values. For the ith Dirac delta of the mixture, the position $d_{pos}[i]$ and probability mass $d_{mass}[i]$ are stored.

FIG. 4 illustrates a one bit-level layout for such a Dirac mixture. The set of bits in the layout allow a concise in-processor representation for any probability distribution, whether it is an empirical distribution or a (parametric) nameable distribution such as an exponential distribution or a Gaussian distribution.

The above sum-of-Dirac-deltas representation may be described in the form of a set of tuples (i.e., a set of n k-tuples). A reference herein to a "tuple" may be considered to include a reference to a data structure consisting of multiple parts defining an ordered set of data constituting a record, as is commonly understood in the art. In mathematics, a tuple is a finite sequence of elements such as a sequence of $k$ elements, where $k$ is a non-negative integer (e.g., k=2).

In a preferred embodiment of the present disclosure, each tuple of the set of tuples is a real or integer value (i.e., the position parameter) paired with a probability (i.e., the probability mass, which is a real number between 0 and 1), and the probabilities in the set of tuples add up to 1. Accordingly, each tuple provides a data structure within which distributional information is encoded. These tuples are distinct from the probability distribution itself.

Tuples other than those described above may be used in further embodiments. For example, ($m$+1)-tuples could be defined where the first $m$ numbers tell the $m$-dimensional position of a Dirac delta, and the last number is the probability mass of the Dirac delta.

The exemplary uncertainty representation described above makes it unnecessary to generate large numbers of samples in order to sample the tails of a distribution (i.e., to converge) in the terminology of Monte Carlo methods. In particular, the uncertainty representation (and subsequent computation using it) makes irrelevant the whole idea of having to keep running Monte Carlo iterations until one has sampled far enough out into the tails (of the inputs as well as of the results). The uncertainty representation is therefore more efficient to transmit and also makes computation on this uncertainty representation yield better results. Most importantly, for distributions where one is able to create the representation from the analytic form, it removes the need, during computation, for repeatedly sampling until the probability of having sampled in the tails of the distribution has reached some threshold (convergence).

When performing arithmetic operations with the TTRs described above, it is assumed that the involved distribution variables are uncorrelated (independent). However, this assumption may not always hold, for instance in case of multidimensional data, potentially leading to inaccurate results when using techniques such as TTR.

Correlations associated with distribution variables can arise in several ways, including the following:

    1. When obtaining distribution representations from multidimensional data, each dimension corresponds to a distinct distribution, each with its own representation. In this case, the distributional variables corresponding to each dimension are generally nontrivially correlated (e.g., not necessarily mutually independent).

2. When doing arithmetic operations with distributional variables, the resulting distributional variables can be (nontrivially) correlated with each other even if one had started off with independent distributional variables. For instance, suppose A and B are independent distributional variables, and one computes C = A + B and D = A . B. Then, C and D are not mutually independent, i.e., they are correlated.

The present invention enables performing arithmetic operations with such correlated (non-independent) distributions minimizing or excluding informational loss by tracking correlations between distributional variables, i.e., by capturing correlations amongst distributions obtained from multidimensional data and by keeping track of how a given distributional variable originates from other distributional variables. Utilizing such ancestral information of a given distributional variable is a core idea underlying the present invention. In particular, the ancestral information that tracks correlations between distributional variables enables the accurate propagation of uncertainty through numerous problems, which TTR cannot accomplish.

An exemplary and non-limiting embodiment of the present invention for tracking correlations between distributional variables is based on TTR and is referred to as "jTTR" (Joint Telescoping Torques Distribution Representation) in the following description.

Briefly summarized, jTTR effectively tracks correlations between distributional variables by tracking the origins of each distributional variable from other distributional variables. This capability allows jTTR to accurately propagate uncertainty through many arithmetic operations where TTR falls short. For instance, a conversion algorithm can be used to take in a sequence of multidimensional samples (each of the same dimensionality) and output a jTTR for each variable corresponding to a dimension.

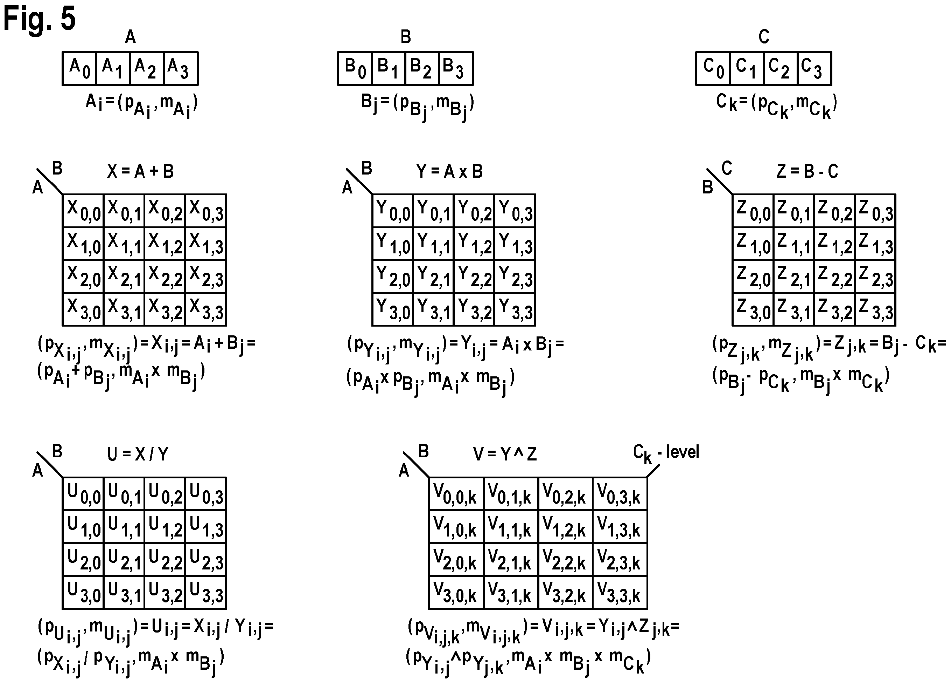

FIG. 5 illustrates an example of carrying out arithmetic operations with jTTR. The example in FIG. 5 presents the underlying principles of the correlation tracking discussed in this disclosure.

jTTRs use Dirac deltas, just as TTRs do, to represent a given distributional variable. The elements of the arrays and matrices depicted in FIG. 5 are Dirac deltas of the form $(p, m)$, where $p$ represents the position and $m$ represents the mass of the Dirac delta, i.e., $m \cdot \delta(x - p)$.

The example in FIG. 5 assumes some distributional information already loaded to the initial distributional variables A, B, and C, and carries out the following operations:

$$X = A + B$$

$$Y = A \cdot B$$

(here, "·" denotes multiplication)

$$Z = B - C$$

$$U = X / Y$$

$$V = Y \wedge Z$$

(here, "^" denotes exponentiation)

As shown, the uncertainty is propagated using the ancestral information (correlation) of the distributional variables.

The following provides a comprehensive, non-limiting explanation of the correlation tracking of the present disclosure using jTTR.

Below are some definitions that can be used in embodiments of the present invention in general, and in the jTTR approach in particular.

**1. Distributional variables**

*Distributional variables* mean variables that represent a distribution of possible values rather than a single (particle) value. These distributional variables capture the uncertainty and variability inherent in the data by characterizing the entire range of possible outcomes and their associated probabilities.

### 2. Ancestor(s)

Each of the distributional variables that a given distributional variable originates from can be referred to as its *ancestor*, and the totality of such distributional variables as its *ancestors* (or *ancestral information*).

jTTRs use Dirac deltas, just as TTRs do, to represent a given distributional variable. The Dirac deltas of the ancestors (which themselves are represented as jTTRs) of a given distributional variable can be referred to as *ancestral Dirac deltas.*

### 3. Initial distributional variables

Ancestors are *initial distributional variables:* The initial distributional variables can be defined in terms of (e.g., multidimensional) samples or as a parametric distribution with given parameters. The initial distributional variables are not results of arithmetic operations and can be directly injected into the compute system.

### 4. Latent distributional variables

Distributional variables that arise as results of arithmetic operations can be referred to as *latent distributional variables.*

### 5. Ancestor group(s)

Each ancestor corresponds to a single initial distributional variable. Two given ancestors are not necessarily mutually independent. Ancestors can be correlated, for instance when they are derived from the same set of multidimensional samples.

To achieve correlation tracking, one can group ancestors into ancestor groups based on one or more grouping criteria.

In some embodiments, the one or more grouping criteria can include or consist of:

i) each ancestor belongs to only a single ancestor group,

ii) the ancestors within an ancestor group are correlated with each other, and

iii) two ancestors from two different ancestor groups are always mutually independent.

However, the present disclosure is not limited to the aforementioned grouping criteria. Other and/or additional grouping criteria may be defined based on the specific use case or requirements.

A jTTR of an initial distributional variable (which is an ancestor by definition) possesses only the unique ancestor group that it belongs to. For example, if a distributional variable A is defined as a parametric distributional variable, then its jTTR has only the ancestor group {A}. As another example, if the initial distributional variables A and B are defined in terms of two-dimensional samples ($A_i$, Bi), then both the jTTRs for A and B have only the ancestor group {A, B}.

Furthermore, when doing arithmetic operations with jTTRs, the resulting jTTR obtains the union of the ancestor groups of the source distributional variables. For example, suppose A has the ancestor group {A}, B has the ancestor group {B}, C and D (being generated from two-dimensional samples) both have the ancestor group {C, D}, and suppose one does the calculations X = A + C, Y = B · D, and Z = X / Y. Then, X will have the ancestor groups {A} and {C, D}, Y will have the ancestor groups {B} and {C, D}, and Z will have the ancestor groups {A}, {B}, and {C, D}.

In some embodiments, Dirac deltas may be stored according to the corresponding ancestor group(s) to allows the identification of which ancestral Dirac deltas each of the Dirac deltas have originated from. This identification can then be used to decide on how to compute with the Dirac deltas of two distributional variables when carrying out an arithmetic operation on them.

For example, a jTTR may arrange its Dirac deltas in a memory in a special manner dictated by its ancestor groups that allows the identification of which ancestral Dirac deltas each of its Dirac deltas have originated from. It then uses this identification to decide on how to compute with the Dirac deltas of two distributional variables when carrying out an arithmetic operation on them.

The memory layout of the Dirac deltas of a jTTR may follow a *d*-dimensional discrete hypercube where *d* is the number of ancestors the jTTR has. The *d* ancestors are thought to make up the dimensions of the discrete hypercube.

Each dimension of the discrete hypercube has $N$ entries where $N$ is the representation size for a TTR (which is equivalent to a single-dimensional jTTR, e.g., the jTTR of A in the above example). One can refer to the value $N$ as the *base representation size* for the jTTR.

In general, a jTTR will have $N^d$ Dirac deltas, coming from the $N$ possible distinct entries per dimension of the $d$-dimensional discrete hypercube. Based on this model, each Dirac delta of a jTTR will have a $d$-dimensional index that uniquely identifies the Dirac delta. One can make use of this indexing framework to track the origins of Dirac deltas in order to compute with the Dirac deltas in a way that respects correlations.

As an example, suppose A has the ancestor group {A}, B has the ancestor group {B}, and C has the ancestor group {C}, and one computes X = A + B, Y = B - C, and Z = X / Y.

Then, X will have the ancestor groups {A} and {B}, and it will have $N^2$ Dirac deltas indexed with the two-dimensional index $(i_a, i_b)$, $0 \leq i_a, i_b < N$. The position of the $(i_a, i_b)$ th Dirac delta of X will be the sum of the position of the $i_a$ th Dirac delta of A and the position of the $i_b$ th Dirac delta of B, and the probability mass of the $(i_a, i_b)$ th Dirac delta of X will be the product of the probability mass of the $i_a$ th Dirac delta of A with the probability mass of the $i_b$ th Dirac delta of B.

Similarly, Y will have the ancestor groups {B} and {C}, and it will have $N^2$ Dirac deltas indexed with the two-dimensional index $(i_b, i_c)$, $0 \leq i_b, i_c < N$. The position of the $(i_b, i_c)$ th Dirac delta of Y will be the subtraction of the position of the $i_b$ th Dirac delta of B from the position of the $i_c$ th Dirac delta of C, and the probability mass of the $(i_b, i_c)$ th Dirac delta of Y will be the product of the probability mass of the $i_b$ th Dirac delta of B with the probability mass of the $i_c$ th Dirac delta of C.

Finally, Z will have the ancestor groups {A}, {B} and {C}, and it will have $N^3$ Dirac deltas indexed with the two-dimensional index $(i_a, i_b, i_c)$, $0 \leq i_a, i_b, i_c < N$. The position of the $(i_a, i_b, i_c)$ th Dirac delta of Z will be the division of the position of the $(i_a, i_b)$ th Dirac delta of X by the position of the $(i_b, i_c)$ th Dirac delta of Y, and the probability mass of the $(i_a, i_b, i_c)$ th Dirac delta of Z will be the product of the probability mass of the $i_a$ th Dirac delta of A, the probability mass of the $i_b$ th Dirac delta of B, and the probability mass of the $i_c$ th Dirac delta of C.

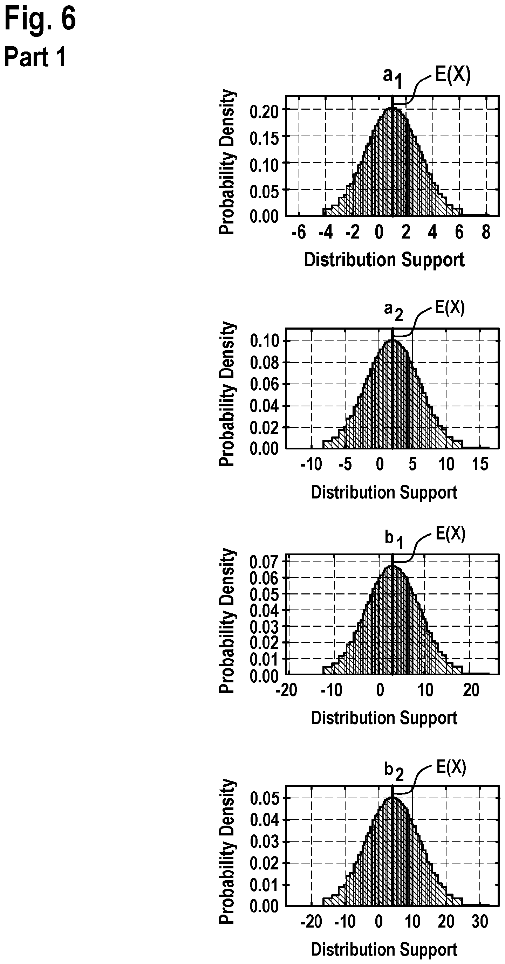

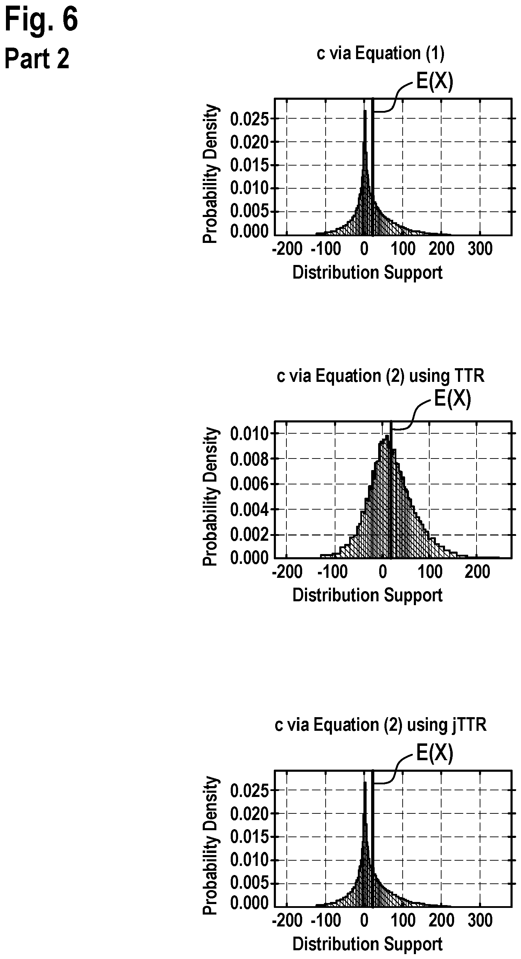

FIG. 6 illustrates a comparative example for uncertainty tracking using TTR and jTTR.

Consider the following example that calculates:

$$c = (a_1 + a_2)(b_1 + b_2) \hspace{3cm} \text{equation (1)}$$

Equation (1) is equivalent to:

$$c = a_1 \cdot b_1 + a_1 \cdot b_2 + a_2 \cdot b_1 + a_2 \cdot b_2 \hspace{2cm} \text{equation (2)}$$

It is assumed that the initial variables $a_1$, $a_2$, $b_1$, and $b_2$ are Gaussian distributed with means and standard deviations (1.0, 2.0), (2.0, 4.0), (3.0, 6.0), and (4.0, 8.0), respectively, as shown in the upper half of FIG. 6.

Calculating c as in equation (1) does not require any correlation tracking because at each step one does arithmetic operations with distributions which are mutually independent. As such, TTR (or jTTR) can handle this calculation accurately.

However, calculating c as in equation (2) does require correlation tracking because, for instance, $a_1 \cdot b_1$ and $a_1 \cdot b_2$ are correlated with each other. When calculating c via equation (2) using TTR, one does not get the same (correct) answer as when calculating c via equation (1). However, if one uses jTTR to calculate c via equation (2), one does get the same answer, as shown in the lower half of FIG. 6.

Furthermore, besides quantifying accuracy by comparing against a golden standard (e.g., a Monte Carlo approach), one can also evaluate the correctness of the correlation tracking capability of jTTR by using trivial expressions. A trivial expression is an expression that equates to 0 or 1. Consider the following examples:

$$(A + B) \cdot (A - B) - (A \cdot A - B \cdot B) = 0$$

$$A \cdot (B + C) / (A \cdot B + A \cdot C) = 1$$

TTR cannot correctly resolve these trivial expressions because it cannot account for the correlations between the intermediate latent variables $c_1 = (A + B)$ and $c_2 = (A - B)$ (and other involved intermediary terms). To the contrary, jTTRs can provide exact results for such trivial expressions using its correlation tracking capability.

The inventors have evaluated jTTR performance against the Monte Carlo (MC) approach of same accuracy. Below are some of the evaluation results.

**Table 1**

| core | jTTR execution time | MC iterations | MC execution time | speedup |
|---|---|---|---|---|
| C0Pro-Jupiter-32 | 100.54 ms | 16,701 | 3,081.59 ms | 30.6494 |
| C0Pro-Jupiter-64 | 347.54 ms | 85,201 | 15,714.48 ms | 45.2163 |
| C0Pro-Jupiter-126 | 2,591.66 ms | 234,301 | 43,211.76 ms | 16.6734 |
| C0Pro-Jupiter-256 | 10,368.90 ms | 431,601 | 79,598.17 ms | 7.6766 |

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

**Claims**

1.  A computer-implemented method for computation on distributions, comprising:

    obtaining at least a first representation of a first distributional variable and a second representation of a second distributional variable; and
    executing an arithmetic operation on the first representation and the second representation to obtain a computation result in the form of a third representation of a third distributional variable,
    wherein executing the arithmetic operation on the first representation and the second representation is based on, or includes, correlation information, which indicates a correlation of at least one of the first representation and the second representation with one or more correlated distributional variables.

2.  Method of claim 1, wherein the first representation, the second representation and/or the third representation are in the form of a sum of Dirac deltas.

3.  Method of claim 1 or 2, wherein at least one of the first distributional variable and the second distributional variable is based on a data set which includes, or is, a set of empirical samples or an analytic distribution or a set of sensor readings.

4.  Method of claim 3, wherein the data set includes, or is, multidimensional data.

5.  Method of any one of claims 1 to 4, wherein obtaining at least a first representation of a first distributional variable and a second representation of a second distributional variable includes:
    processing multidimensional data to generate a representation for each dimension of the multidimensional data.

6.  Method of claim 5, wherein the correlation information indicates a correlation between dimensions of the multidimensional data.

7.  Method of any one of claims 1 to 6, wherein the correlation information indicates a correlation between

    said at least one of the first distributional variable or the second distributional variable and
    at least one further distributional variable from which said at least one of the first distributional variable or the second distributional variable originates.

8.  Method of claim 7, wherein said at least one of the first distributional variable or the second distributional variable originates from the at least one further distributional variable through an arithmetic operation.

9. Method of any one of claim 1 to 8, further including:

obtaining initial distributional variables from a data set; and
defining ancestor groups of initial distributional variables or their respective representations based on one or more grouping criteria,
wherein the correlation information relates to one or more ancestor groups from which the first distributional variable and the second distributional variable originate.

10. Method of claim 9, wherein the initial distributional variables are not results of computer-implemented arithmetic operations.

11. Method of claim 9 or 10, wherein the one or more grouping criteria include:

each ancestor belongs to only one single ancestor group,
ancestors within each ancestor group are correlated with each other, and
two ancestors from two different ancestor groups are not correlated with each other.

12. Method of any one of claims 9 to 11, further including:
storing the representations of the distributional variables based on their ancestor groups, in particular wherein a memory layout is based on a d-dimensional discrete hypercube.

13. A data processing system for computation on distributions, preferably computation on representation of distributional variables, comprising one or more processors configured to:

obtain at least a first representation of a first distributional variable and a second representation of a second distributional variable; and
execute an arithmetic operation on the first representation and the second representation to obtain a computation result in the form of a third representation of a third distributional variable,
wherein the one or more processors are configured to execute the arithmetic operation on the first representation and the second representation based on correlation information, which indicates a correlation of at least one of the first representation and the second representation with one or more correlated distributional variables.

14. A computer program comprising instructions which, when the program is executed by a computer, cause the computer to carry out the method of any one of claims 1 to 12.

15. A computer-readable storage medium comprising instructions which, when the program is executed by a computer, cause the computer to carry out the method of any one of claims 1 to 12.

**Fig. 1**

100

INPUT
DATA

OUTPUT
DATA

**Fig. 2**

200

INPUT
DATA

OUTPUT
DATA

# Fig. 3

a)

Step 0 (TTR-1):

b)

Step 1 (TTR-2):

c)

Step 2 (TTR-4):

# Fig. 4

| Z | Y | X | W | V | U | 127 | 64 | 63 | 0 |
|---|---|---|---|---|---|-----|----|----|---|
| dMass[N-1] | . . . | dMass[0] | | dPos[N-1] | . . . | dPos[0] | | $n_{samples}$ | |

| N probability masses | | | N support positions | | |
|---|---|---|---|---|---|

N : Size of the distributional representation. It contains N support positions and N probability masses, each 64 bits long

$n_{samples}$ : The 64-bit long number of particle samples that Laplace used to generate the distributional representation

U : Beginning of the Nth support position bitfield. Starts after (N-1) positions of 64 bits plus 64 bits for $n_{samples}$. U=64N

V : End of the Nth support position bitfield. V = U + 63 = 64(N+1) - 1 bits

W : Beginning of the 1st probability mass bitfield. W = V + 1 = 64(N+1) bits

X : End of the 1st probability mass bitfield. X = W + 63 = 64(N+2) - 1 bits

Y : Beginning of the Nth probability mass bitfield. Starts after N positions and (N-1) masses plus $n_{samples}$. Y = 2N*64 bits

Z : End of the Nth probability mass bitfield. Z = Y + 63 = 64(2N+1) - 1 bits

# Fig. 5

A

| $A_0$ | $A_1$ | $A_2$ | $A_3$ |
|---|---|---|---|

$A_i = (p_{A_i}, m_{A_i})$

B

| $B_0$ | $B_1$ | $B_2$ | $B_3$ |
|---|---|---|---|

$B_j = (p_{B_j}, m_{B_j})$

C

| $C_0$ | $C_1$ | $C_2$ | $C_3$ |
|---|---|---|---|

$C_k = (p_{C_k}, m_{C_k})$

$X = A + B$

| | | | |
|---|---|---|---|
| $X_{0,0}$ | $X_{0,1}$ | $X_{0,2}$ | $X_{0,3}$ |
| $X_{1,0}$ | $X_{1,1}$ | $X_{1,2}$ | $X_{1,3}$ |
| $X_{2,0}$ | $X_{2,1}$ | $X_{2,2}$ | $X_{2,3}$ |
| $X_{3,0}$ | $X_{3,1}$ | $X_{3,2}$ | $X_{3,3}$ |

(B / A)

$(p_{X_{i,j}}, m_{X_{i,j}}) = X_{i,j} = A_i + B_j =$
$(p_{A_i} + p_{B_j}, m_{A_i} \times m_{B_j})$

$Y = A \times B$

| | | | |
|---|---|---|---|
| $Y_{0,0}$ | $Y_{0,1}$ | $Y_{0,2}$ | $Y_{0,3}$ |
| $Y_{1,0}$ | $Y_{1,1}$ | $Y_{1,2}$ | $Y_{1,3}$ |
| $Y_{2,0}$ | $Y_{2,1}$ | $Y_{2,2}$ | $Y_{2,3}$ |
| $Y_{3,0}$ | $Y_{3,1}$ | $Y_{3,2}$ | $Y_{3,3}$ |

(B / A)

$(p_{Y_{i,j}}, m_{Y_{i,j}}) = Y_{i,j} = A_i \times B_j =$
$(p_{A_i} \times p_{B_j}, m_{A_i} \times m_{B_j})$

$Z = B - C$

| | | | |
|---|---|---|---|
| $Z_{0,0}$ | $Z_{0,1}$ | $Z_{0,2}$ | $Z_{0,3}$ |
| $Z_{1,0}$ | $Z_{1,1}$ | $Z_{1,2}$ | $Z_{1,3}$ |
| $Z_{2,0}$ | $Z_{2,1}$ | $Z_{2,2}$ | $Z_{2,3}$ |
| $Z_{3,0}$ | $Z_{3,1}$ | $Z_{3,2}$ | $Z_{3,3}$ |

(C / B)

$(p_{Z_{j,k}}, m_{Z_{j,k}}) = Z_{j,k} = B_j - C_k =$
$(p_{B_j} - p_{C_k}, m_{B_j} \times m_{C_k})$

$U = X / Y$

| | | | |
|---|---|---|---|
| $U_{0,0}$ | $U_{0,1}$ | $U_{0,2}$ | $U_{0,3}$ |
| $U_{1,0}$ | $U_{1,1}$ | $U_{1,2}$ | $U_{1,3}$ |
| $U_{2,0}$ | $U_{2,1}$ | $U_{2,2}$ | $U_{2,3}$ |
| $U_{3,0}$ | $U_{3,1}$ | $U_{3,2}$ | $U_{3,3}$ |

(B / A)

$(p_{U_{i,j}}, m_{U_{i,j}}) = U_{i,j} = X_{i,j} / Y_{i,j} =$
$(p_{X_{i,j}} / p_{Y_{i,j}}, m_{A_i} \times m_{B_j})$

$V = Y \wedge Z$    $C_k$ - level

| | | | |
|---|---|---|---|
| $V_{0,0,k}$ | $V_{0,1,k}$ | $V_{0,2,k}$ | $V_{0,3,k}$ |
| $V_{1,0,k}$ | $V_{1,1,k}$ | $V_{1,2,k}$ | $V_{1,3,k}$ |
| $V_{2,0,k}$ | $V_{2,1,k}$ | $V_{2,2,k}$ | $V_{2,3,k}$ |
| $V_{3,0,k}$ | $V_{3,1,k}$ | $V_{3,2,k}$ | $V_{3,3,k}$ |

(B / A)

$(p_{V_{i,j,k}}, m_{V_{i,j,k}}) = V_{i,j,k} = Y_{i,j} \wedge Z_{j,k} =$
$(p_{Y_{i,j}} \wedge p_{Y_{j,k}}, m_{A_i} \times m_{B_j} \times m_{C_k})$

# Fig. 6
## Part 1

# Fig. 6
## Part 2

c via Equation (1)

c via Equation (2) using TTR

c via Equation (2) using jTTR

Europäisches
Patentamt
European
Patent Office
Office européen
des brevets

# EUROPEAN SEARCH REPORT

**Application Number**

EP 24 18 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/248714 A1 (CAMBRIDGE ENTPR LTD [GB]) 1 December 2022 (2022-12-01) <br> * page 30, line 17 - page 33, line 18 * <br> * page 42, line 42 - page 59, line 11 * <br> ----- | 1-15 | INV. <br> G06F7/544 <br> G06F16/2458 <br> G06F17/18 |
| A | TSOUTSOURAS VASILEIOS ET AL: "The Laplace Microarchitecture for Tracking Data Uncertainty and Its Implementation in a RISC-V Processor", <br> PROCEEDINGS OF THE 1ST INTERNATIONAL WORKSHOP ON EXTREME HETEROGENEITY SOLUTIONS, ACMPUB27, NEW YORK, NY, USA, <br> 18 October 2021 (2021-10-18), pages 1254-1269, XP058988607, <br> DOI: 10.1145/3466752.3480131 <br> ISBN: 978-1-4503-9431-4 <br> * Sections 2, 3, 4 * <br> ----- | 1-15 | |
| A | THANH T L TRAN ET AL: "PODS", <br> PROCEEDINGS OF THE 2010 INTERNATIONAL CONFERENCE ON MANAGEMENT OF DATA, SIGMOD '10, ACM PRESS, NEW YORK, NEW YORK, USA, <br> 6 June 2010 (2010-06-06), pages 159-170, XP058087462, <br> DOI: 10.1145/1807167.1807187 <br> ISBN: 978-1-4503-0032-2 <br> * Sections 3, 4, 5 * <br> ----- | 1-15 | **TECHNICAL FIELDS SEARCHED (IPC)** <br><br> G06F |

The present search report has been drawn up for all claims

| Place of search | Date of completion of the search | Examiner |
|---|---|---|
| Munich | 19 November 2024 | Tenbieg, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                            

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 3568

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | | Publication date |
|---|---|---|---|---|
| WO 2022248714 A1 | 01-12-2022 | DE | 112022002790 T5 | 16-05-2024 |
| | | EP | 4348413 A1 | 10-04-2024 |
| | | EP | 4348420 A1 | 10-04-2024 |
| | | JP | 2024520473 A | 24-05-2024 |
| | | US | 2024201996 A1 | 20-06-2024 |
| | | WO | 2022248714 A1 | 01-12-2022 |
| | | WO | 2022248719 A1 | 01-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022248719 A